# EUROPEAN PATENT APPLICATION

(11) **EP 4 535 596 A1**
(43) Date of publication of application: **09.04.2025**
(21) Application number: 24198762.7
(22) Date of filing: 05.09.2024
(51) Int. Cl.: H02J 5/00

(54) **IMPROVED POWER ARCHITECTURE**

(30) Priority: 07.09.2023 US 202318463171
(71) Applicant: B/E Aerospace, Inc., Winston-Salem, NC 27105 (US)
(72) Inventor: JOHANNESSEN, Eric, Holbrook (US)
(74) Representative: Dehns

(57) **Abstract**

A power system (500) is disclosed herein. The power system (500) includes a power source configured to supply an input power, the input power (504) being an alternating current, AC, power, a power factor correction, PFC, (502) configured to receive the input power (504) from the power source and output an output power (506), the output power (506) being a direct current, DC, power having a first DC voltage, and an electric component (510) configured to receive the output power (506), the electric component including a DC to DC converter (520) configured to convert the output power (506) to a component power usable by the electric component, the component power being a DC power.

## Description

### TECHNICAL FIELD

The present disclosure generally relates power systems, and more particularity, to power systems used in aircraft.

### BACKGROUND

Modern aircraft include different electric components including lighting, screens, controls, motors, and sensors, among others. Larger aircraft generally include an alternating current (AC) power supply and smaller aircraft generally include a low voltage direct current (DC) power supply. The electric components within modern aircraft generally use low voltage DC power. Current aircraft power systems may use one of several power system architectures to deliver the DC power to the electric components. However, current power system architectures each have drawbacks that may be improved.

### SUMMARY

According to an aspect, there is provided a power system. The power system includes a power source configured to supply an input power, the input power being an alternating current (AC) power, a power factor correction (PFC) configured to receive the input power from the power source and output an output power, the output power being a direct current (DC) power having a first DC voltage, and an electric component configured to receive the output power, the electric component including a DC to DC converter configured to convert the output power to a component power usable by the electric component, the component power being a DC power.

In various embodiments, the input power is a high voltage AC power and the first DC voltage is a high voltage DC power. In various embodiments, the input power is about 115 VAC to about 240 VAC. In various embodiments, the first DC voltage is about 200 VDC to about 300 VDC. In various embodiments, the component power is a second DC voltage that is less than the first DC voltage.

In various embodiments, the second DC voltage is about 24 VDC to about 72 VDC. In various embodiments, the power system further includes a plurality of low gauge, high voltage wires electrically coupling the electric component to the PFC. In various embodiments, the electric component includes a light, a screen a switch, a control, or an outlet.

According to a further aspect, there is provided an aircraft including a cabin, a power distribution system including a power source configured to supply an input power and a power factor correction (PFC) configured to receive the input power from the power source and supply an output power, and a plurality of passenger service units disposed within the cabin and configured to receive power from the power distribution system, wherein each of the plurality of passenger service units includes an electric component, the electric component including a direct current (DC) to DC converter configured to convert the output power to a component power usable by the electric component.

In various embodiments, the input power is a high voltage AC power and the output power is a high voltage DC power. In various embodiments, the input power is about 115 VAC to about 240 VAC. In various embodiments, the output power is about 200 VDC to about 300 VDC. In various embodiments, the output power is a first DC voltage and the component power is a second DC voltage that is less than the first DC voltage.

In various embodiments, the second DC voltage is about 24 VDC to about 72 VDC. In various embodiments, the power distribution system further includes a plurality of low gauge, high voltage wires electrically coupling the plurality of passenger service units to the PFC. In various embodiments, the electric component includes a light, a screen a switch, a control, or an outlet.

According to a further aspect, there is provided an aircraft including a cabin, a cockpit, a first electric component disposed in the cabin, the first electric component including a first direct current (DC) to DC converter, a second electric component disposed in the cockpit, the second electric component including a second DC to DC converter, and a power source electrically coupled to the first electric component and the second electric component via a plurality of wires.

In various embodiments, the power source outputs a first DC power, the first DC to DC converter converts the first DC power to a second DC power that is usable by the first electric component, and the second DC to DC converter converts the first DC power to a third DC power that is usable by the second electric component. In various embodiments, the power source further includes an alternating current (AC) input and a power factor correction (PFC) configured to convert the AC input to the first DC power. In various embodiments, the first electric component and the second electric component each include at least one of a light, a screen a switch, a control, or an outlet.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft and various sections within the aircraft, in accordance with various embodiments.
FIG. 2 illustrates a cabin area in an aircraft with a smart air ionizer system, in accordance with various embodiments.
FIGS. 3A, 3B, and 3C illustrate views of passenger service units (PSU) as seen from a passenger sitting on one of the passenger seats below each PSU, in accordance with various embodiments.
FIG. 4 illustrates a passenger seat including an infotainment system, according to various embodiments.
FIG. 5 illustrates a power system architecture that may be used in an aircraft, in accordance with various embodiments.
FIG. 6 illustrates a power system architecture that may be used in an aircraft, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein is a power system architecture for powering a variety of electric components, or loads. In various embodiments, the power system architecture may be used in automobiles, aircraft, ships, trains, or other vehicles and/or systems. In various embodiments, an electric component may include lighting, screens, controls, motors, sensors, general electronics including charging devices and other devices and/or components that use electricity. In various embodiments, the power system architecture may be a drop in replacement for existing power system. In various embodiments, the power system architecture includes a power factor correction (PFC) unit that receives an input voltage and supplies an outputs a high voltage direct current (DC) voltage (e.g., 200 V). In various embodiments, the input voltage is an alternating current (AC) voltage (e.g., 115 V). In various embodiments, the input voltage is a DC voltage. In various embodiments, the DC input voltage may be a low voltage (e.g., 28 V). Generally, larger gauge wires are used to carry low voltage and high current power and smaller gauge wires are used to carry high voltage and low current power. The power system architecture, in various embodiments, uses smaller gauge wires throughout the system due to the high voltage DC power being distributed.

The power system architecture further includes a plurality of electric components, or electric loads, that are connected to the high voltage DC output of the PFC unit. In various embodiments, each electric component includes a DC/DC converter to convert the high voltage DC output of the PFC to the DC voltage used by the electric component. This simplifies the DC/DC converter, in various embodiments, and may reduce the use of cooling fins and other components. That is, in various embodiments, the smaller DC/DC converters may be air cooled. Furthermore, the heat from each DC/DC converter is, in various embodiments, distributed throughout the power system architecture instead of being located in a single location.

Furthermore, and in various embodiments, the stand alone PFC reduces the chance of failure in the power architecture system. That is, the PFC provides a high voltage conversion of AC to DC power and a power factor correction to improve the efficiency of the power distribution. However, should the PFC fail, the power will continue to be converted from AC to DC but without the power factor correction, resulting in a system that is less efficient but still functional.

Generally, power distribution systems may be categorized into three different architectures. The first architecture includes a single combined PFC and AC/DC converter with a low voltage output that uses heavy, large gauge wires for DC power distribution. If the single combined PFC and AC/DC converter fails, the entire system ceases to function. The second architecture uses multiple combined PFC and AC/DC converters that each power a limited number of electric components. Should one of the combined PFC and AC/DC converters fail, the few connected electric components fail, allowing electric components connected to other PFCs to remain functional. This avoids a failure mode where all electric components fail. The third architecture uses an AC power source connected to each electric component using lighter, low gauge wires and each electric component includes an AC/DC converter. This increases complexity and cost for each AC/DC converter. The power system architecture described herein provides an improved power distribution system by reducing the impact of points of failure, using less expensive and lighter components (e.g., lower gauge wires), and, in various embodiments, a more reliable stand alone PFC. Furthermore, in various embodiments, the input voltage to the power system architecture described herein may be a DC voltage, either a low voltage (e.g., 28 V) or a high voltage (e.g., 200 V) input. Accordingly, the power system architecture described herein is backwards compatible with current aircraft and forward compatible for future electric aircraft.

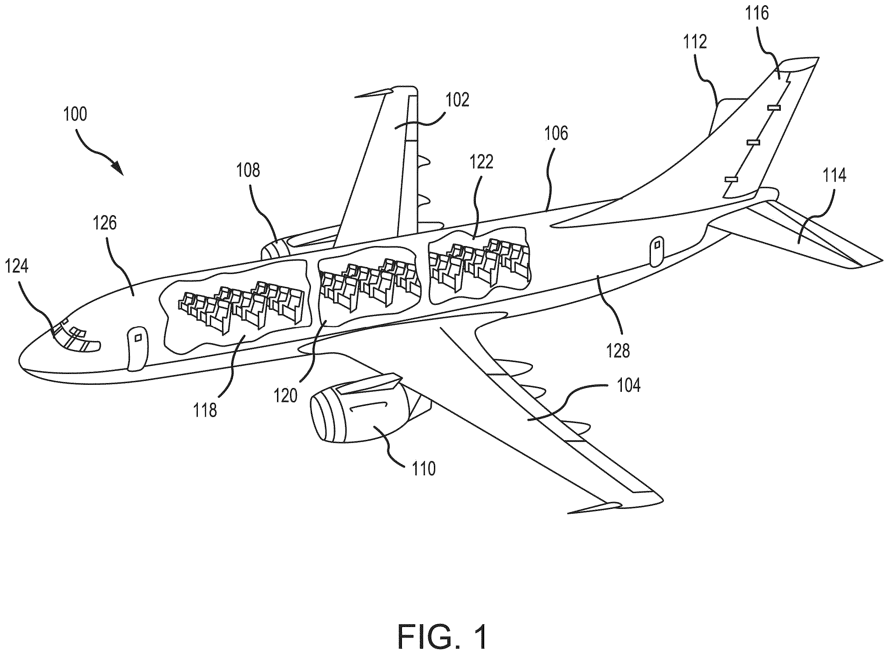

Referring now to FIG. 1, an aircraft 100 and various sections within the aircraft is illustrated, in accordance with various embodiments. Aircraft 100 is an example of a passenger or transport vehicle in which electric devices may be used in accordance with various embodiments. In various embodiments, aircraft 100 has a starboard wing 102 and a port wing 104, each of which is attached to a fuselage 106. In various embodiments, aircraft 100 also includes a starboard engine 108 connected to starboard wing 102 and a port engine 110 connected to port wing 104. In various embodiments, aircraft 100 also includes a starboard horizontal stabilizer 112, a port horizontal stabilizer 114, and a vertical stabilizer 116. In various embodiments, aircraft 100 also includes various cabin sections, including, for example, a first cabin section 118, a second cabin section 120, a third cabin section 122, and a pilot cabin 124. In various embodiments, aircraft 100 may include a front lavatory 126 and/or a rear lavatory 128.

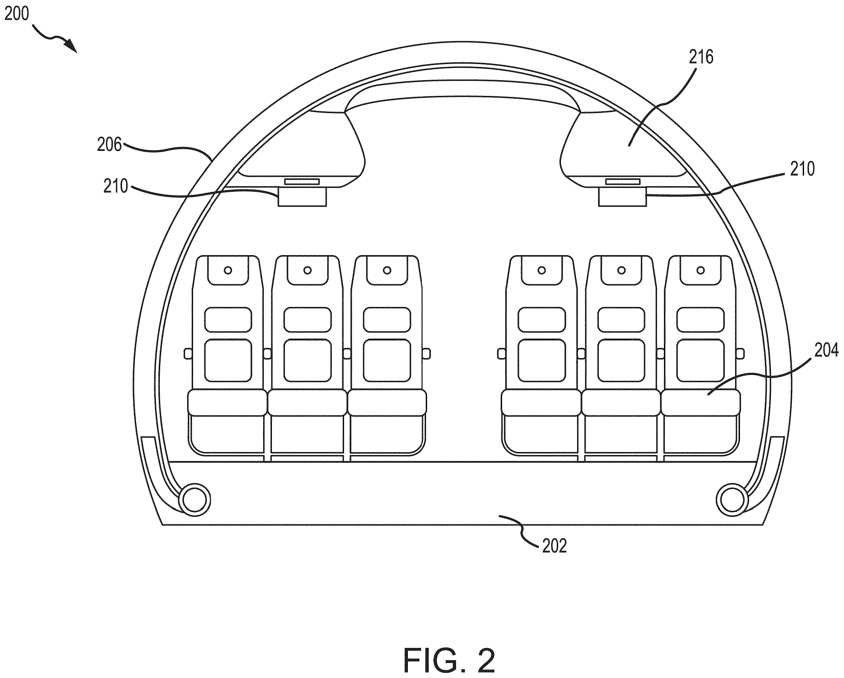

Referring now to FIG. 2, a cabin 200 of an aircraft (e.g., aircraft 100) is illustrated, in accordance with various embodiments. Cabin 200 may be an example of first cabin section 118, second cabin section 120, and/or third cabin section 122. Cabin 200 includes a floor 202, one or more rows of seats 204 mounted to floor 202, a fuselage 206 surrounding cabin 200 to form outer walls and ceiling of cabin 200, and overhead bins 216 that are mounted to fuselage 206. Cabin 200 further includes passenger service units (PSUs) 210 that are mounted underneath overhead bins 216 and above one or more passenger seats 204. In various embodiments, PSUs 210 may include one or more air outlets, one or more reading lights, and a call button, among others. Each of the one or more reading lights may receive power from aircraft 100.

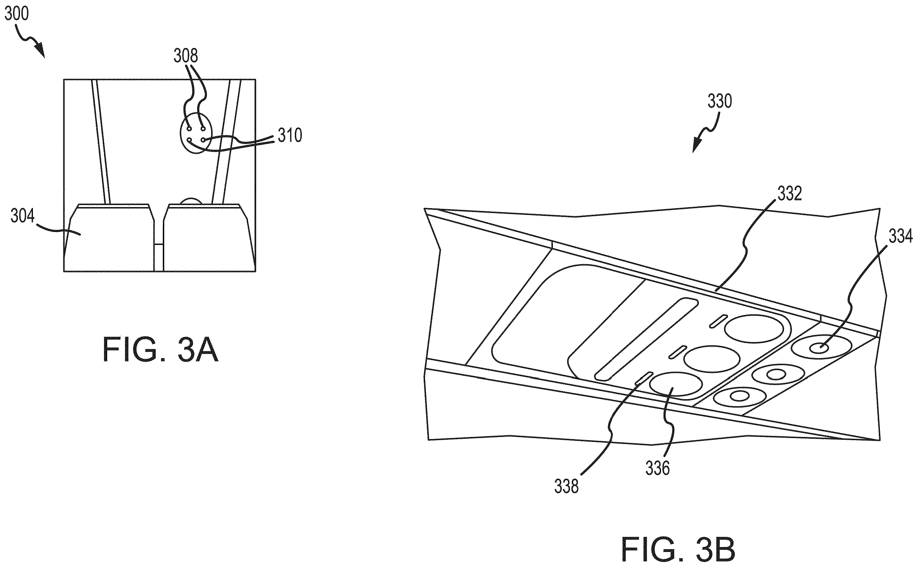

Referring now to FIGS. 3A-3C, illustrated are a passenger service unit (PSU) 400, a PSU 430, and a PSU 460 that may be used in an aircraft cabin (e.g., cabin 200), in accordance with various embodiments. FIG. 3A illustrates PSU 300 above two passenger seats 304, PSU 300 including two passenger air outlets 308 and two reading lights 310. Reading lights 310 receive electric power from aircraft 100 (e.g., cabin 200). In various embodiments, the electric power for reading lights 310 may be run through PSU 300. That is, PSU 300 includes electric power cables to connect to reading lights 310, to adjacent PSUs 300, and/or a power source. In various embodiments, the electric power cables may run above PSU 300 (e.g., between PSU 300 and overhead storage bins).

FIG. 3B illustrates PSU 330 including a body 332 that includes three passenger air outlets 334, three passenger reading lights 336, and three call buttons 338. In various embodiments, PSU 450 may be installed above a three seat aisle in an aircraft. Reading lights 336 receive electric power from aircraft 100 (e.g., cabin 200). In various embodiments, the electric power for reading lights 336 may be run through PSU 330. That is, PSU 330 includes electric power cables to connect to reading lights 336, to adjacent PSUs 330, and/or a power source. In various embodiments, the electric power cables may run above PSU 330 (e.g., between PSU 330 and overhead storage bins).

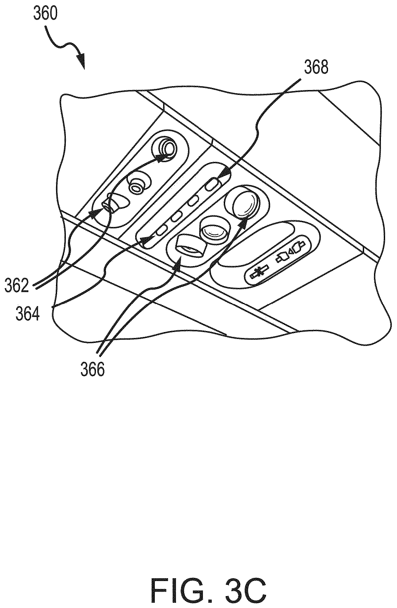

FIG. 3C illustrates PSU 360. In various embodiments, PSU 360 may include a row of three adjacent aircraft passenger cabin gaspers 362. In various embodiments, the gaspers 362 are configured for blowing air towards the passengers, sitting on the passenger seats below the PSU 360. In various embodiments, electrical switches 364 are provided next to reading lights 366. In various embodiments, each electrical switch of the electrical switches 364 is configured for switching an adjacent and associated reading light of reading lights 366, which is arranged next to the electrical switches 364 on the side opposite to the gaspers 362. In various embodiments, a switch 364 may be a call button 368 for triggering a signal for calling flight attendant or other personnel. Reading lights 366, switches 364, and call button 368 receive electric power from aircraft 100 (e.g., cabin 200). In various embodiments, the electric power for reading lights 366, switches 364, and call button 368 may be run through PSU 360. That is, PSU 360 includes electric power cables to connect to reading lights 366, switches 364, and call button 368, to adjacent PSUs 360, and/or a power source. In various embodiments, the electric power cables may run above PSU 360 (e.g., between PSU 360 and overhead storage bins).

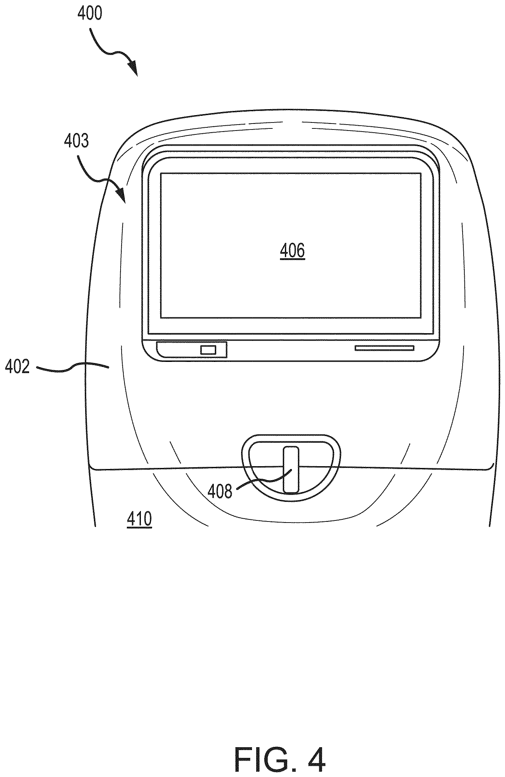

Referring now to FIG. 4, a passenger seat including an infotainment system is illustrated, in accordance with various embodiments. In various embodiments, passenger seat 400, such as passenger seats 204 described above in FIG. 2, includes a seat back 402 with a seat assembly 403 onto which an infotainment system 406 may be located. In various embodiments, infotainment system 406 is disposed proximate a latch 408. "Proximate" as disclosed herein refers to being spaced apart from, in accordance with various embodiments. Latch 408 may be configured to release a tray 410, in accordance with various embodiments. In this regard, latch 408 may retain tray 410 in a closed state in response to latch 408 being in a first position, as illustrated. In various embodiments, by rotating latch 408, tray 410 may be released and transition into an open state. Although illustrated as being configured to rotate, latch 408 is not limited in this regard. For example, latch 408 could include a push release, an automated release, or the like. Infotainment system 406 may receive electric power from aircraft 100 (e.g., cabin 200). In various embodiments, electric power cables may run through passenger seat 400 and into the floor of the cabin (e.g., floor 202 of cabin 200) to be connected to a power source. In various embodiments, the electric power cables may be electrically connected to an adjacent passenger seat 400.

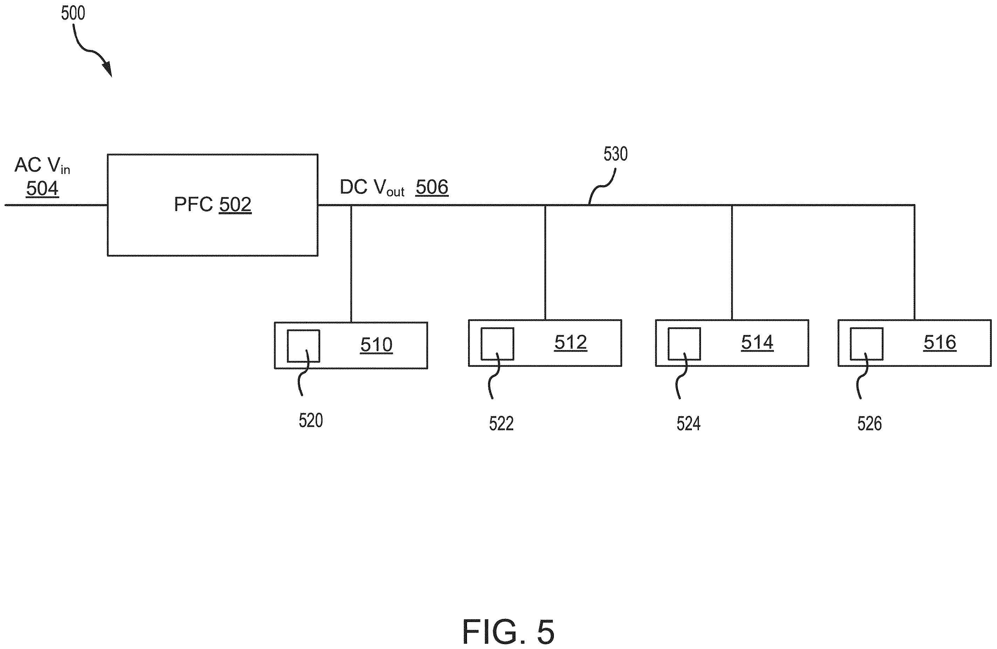

Referring now to FIG. 5, a power system architecture 500 is illustrated, in accordance with various embodiments. Power system architecture 500, also referred to as a power distribution system, may be used in automobiles, trucks, airplanes, and ships, among others. Power system architecture 500 includes a power factor correction (PFC) 502 that receives an alternating current (AC) voltage input (Vᵢₙ) 504 and outputs a direct current (DC) voltage output (Vₒᵤₜ) 506. PFC 502 converts AC Vᵢₙ 504 to a power factor corrected DC Vₒᵤₜ 506. That is, PFC 502 both converts AC Vᵢₙ 504 to DC Vₒᵤₜ 506 and applies a power factor correction to improve the efficiency of power system architecture 500. Vehicles typically include an AC power generator engines and alternators, such as those used in automobiles, airplanes, and ships, among others, while electronics and other components within the vehicle typically use DC power. Therefore, PFC 502 may be designed to receive AC Vᵢₙ 504 as a power input and output a first voltage that is a power corrected DC Vₒᵤₜ 506. That is, PFC 502 compensates for lagging current in AC Vᵢₙ 504 so that the output voltage, DC Vₒᵤₜ 506, is as close to unity as possible. In other words, PFC 502 improves the efficiency of power system architecture 500. In various embodiments, AC Vᵢₙ 504 may be about 100 VAC to about 250VAC, and more specifically, about 115 VAC to about 240 VAC. In various embodiments, the first voltage may be about 24VDC to about 350 VDC, or higher. In various embodiments, the first voltage may be considered a high voltage of about 200 VDC to about 300 VDC.

Power system architecture 500 further includes a first load 510, a second load 512, a third load 514, and a fourth load 516, collectively referred to as loads 510-516, that are connected to PFC 502 by electric wires 530. Loads 510-516 may be electrically driven components such as lights, screens, switches, controls, or outlets, among others. Each load 510-516 may be designed to operate at a second voltage. In various embodiments, the second voltage may be lower than the first voltage. In various embodiments, the second voltage may be about 24 VDC to about 72 VDC, and more specifically, about 28 VDC to about 56 VDC, though other ranges are possible depending on the design of the load (e.g., first load 510). Accordingly, each load 510-516 includes a DC/DC converter.

First load 510 includes a first DC/DC converter 520 that converts the first voltage of DC Vₒᵤₜ 506 to the second voltage used by first load 510. Second load 512 includes a second DC/DC converter 522 that converts the first voltage of DC Vₒᵤₜ 506 to the second voltage used by second load 512. Third load 514 includes a third DC/DC converter 524 that converts the first voltage of DC Vₒᵤₜ 506 to the second voltage used by third load 514. Fourth load 516 includes a fourth DC/DC converter 526 that converts the first voltage of DC Vₒᵤₜ 506 to the second voltage used by fourth load 516. Power system architecture may, in various embodiments, include more loads, including DC/DC converters, than are illustrated in FIG. 5.

Electric wire 530 connects PFC 502 to each load 510-516. In various embodiments, electric wires 530 may be 18 gauge wire or 14 gauge wire, among others. Typically, the smaller 18 gauge wire may be used for transmitting AC power (e.g., 115 V) and larger 14 gauge wire may be used for transmitting low voltage DC power (e.g., 28 V). The 18 gauge wire is suitable for high voltage and low current AC transmission while the 14 gauge wire is suitable for the low voltage and high current DC transmission. By transmitting high voltage, low current DC power, as described herein, power system architecture 500 may, in various embodiments, utilize existing wiring in the vehicle.

By using a single PFC (e.g., PFC 502) and each load 510-516 including a DC/DC convert 520-526, power system architecture 500 is able to be, in various embodiments, cheaper, lower weight, have better performance, and lower electromagnetic interference (EMI) than other conventional system. Various conventional power distribution systems may include one, or more, central power supplies including a PFC and DC/DC convertor to output a low voltage (e.g., 28 V) for use in the vehicle. In such systems, the DC/DC converter is the larger component being about 70% of the power supply. Furthermore, the larger DC/DC converter generates substantial heat and therefore uses active cooling mechanisms to remove the heat. In various other conventional power distribution systems, a high voltage AC power is provided to each load and each load includes a PFC and DC/DC converter. This results in physically larger loads (i.e., components) and higher cost. In contrast, power system architecture 500 includes PFC 502, which is central, without a DC/DC converter resulting in a size decrease of about 70%. Furthermore, each load 510-516 includes DC/DC converters 520-526 that are smaller. The smaller and distributed DC/DC converters 520-526 distribute heat generation throughout the vehicle, resulting in less active cooling being used.

Additionally, the loads 510-516 described herein are smaller than conventional electric components that are used in systems that distribute AC power. As mentioned above, this is due to using a smaller DC/DC converter without a PFC in load 510-516. Furthermore, this allows load 510-516 to be used in existing vehicles that generate AC power, in conjunction with power system architecture, as well as in existing vehicles that generate DC power. This reduces the part count for manufacturers as well as replacement part counts for end users as the same component (e.g., load 510-516) may be used across different vehicles.

Power system architecture 500 further reduces points of failure and removes failure modes in which all electric components (e.g., loads 510-516) cease to function. Specifically, PFC 502 may include a bridge rectifier that converts AC Vᵢₙ 504 to DC Vₒᵤₜ 506 in addition to the power factor correction circuitry. When functioning properly, PFC 502 is able to output a first voltage (e.g., 200 VDC) and a first current. In a failure mode, PFC 502 may output a second voltage (e.g., 160 VDC) that is less than the first voltage and a second current that is greater than the first current. However, each load 510-516 is able to continue operating as DC/DC converter 520-526 are able to convert the lower second voltage to the voltage used by the respective load.

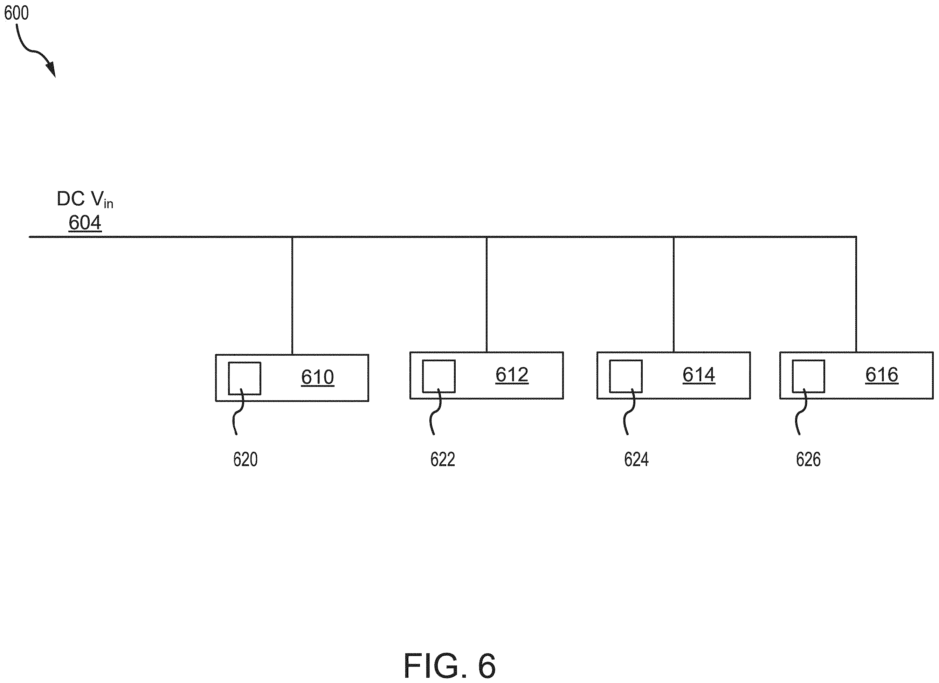

Referring now to FIG. 6, a power system architecture 600 is illustrated, in accordance with various embodiments. Power system architecture 600 includes similar components to those described above in FIG. 5 including a first load 610, a second load 612, a third load 614, a fourth load 616, a first DC/DC converter 620, a second DC/DC converter 622, a third DC/DC converter 624, and a fourth DC/DC converter 626. Power system architecture 600 further includes a DC voltage input (Vᵢₙ) 604. DC Vᵢₙ 602 is a third voltage. In various embodiments, the third voltage may be a high voltage of about 100 VDC to about 350 VDC, and more specifically about 150 VDC to about 250 VDC. In various embodiments, the third voltage may be a low voltage of about 15 VDC to about 72 VDC, and more specifically, about 24 VDC to about 48 VDC.

Loads 610-616 may be the same as loads 510-516 so that load 510-516 may be used in power system architecture 500 as well as power system architecture 600. Furthermore, loads 610-616 may be used in systems where the third voltage (i.e., DC Vᵢₙ 604) is a high voltage as well as systems where the third voltage (i.e., DC Vᵢₙ 604) is a low voltage. Accordingly, in various embodiments, a single electric light (e.g., load 510) may be used in vehicles utilizing power system architecture 500 or in systems utilizing power system architecture 600.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A power system, comprising:
a power source configured to supply an input power, the input power being an alternating current (AC) power;
a power factor correction (PFC) configured to receive the input power from the power source and output an output power, the output power being a direct current (DC) power having a first DC voltage; and
an electric component configured to receive the output power, the electric component including a DC to DC converter configured to convert the output power to a component power usable by the electric component, the component power being a DC power.

2. The power system of claim 1, wherein the input power is a high voltage AC power and the first DC voltage is a high voltage DC power.

3. The power system of claim 2, wherein the input power is about 115 VAC to about 240 VAC.

4. The power system of claim 2 or 3, wherein the first DC voltage is about 200 VDC to about 300 VDC.

5. The power system of any preceding claim, wherein the component power is a second DC voltage that is less than the first DC voltage.

6. The power system of claim 5, wherein the second DC voltage is about 24 VDC to about 72 VDC.

7. The power system of claim any preceding claim, further comprising:
a plurality of low gauge, high voltage wires electrically coupling the electric component to the PFC.

8. The power system of any preceding claim, wherein the electric component includes a light, a screen a switch, a control, or an outlet.

9. An aircraft, comprising:
a cabin;
a power distribution system, comprising:
a power source configured to supply an input power; and
a power factor correction (PFC) configured to receive the input power from the power source and supply an output power; and
a plurality of passenger service units disposed within the cabin and configured to receive power from the power distribution system, wherein each of the plurality of passenger service units includes an electric component, the electric component including a direct current (DC) to DC converter configured to convert the output power to a component power usable by the electric component.

10. The aircraft of claim 9, wherein the input power is a high voltage AC power and the output power is a high voltage DC power and, optionally, wherein:
the input power is about 115 VAC to about 240 VAC; and/or
the output power is about 200 VDC to about 300 VDC.

11. The aircraft of claim 9 or 10, wherein the output power is a first DC voltage and the component power is a second DC voltage that is less than the first DC voltage; and
wherein, optionally, the second DC voltage is about 24 VDC to about 72 VDC.

12. The aircraft of claim 9, 10 or 11, wherein the power distribution system further includes:
a plurality of low gauge, high voltage wires electrically coupling the plurality of passenger service units to the PFC; and/or
wherein the electric component includes a light, a screen a switch, a control, or an outlet.

13. An aircraft, comprising:
a cabin;
a cockpit;
a first electric component disposed in the cabin, the first electric component including a first direct current (DC) to DC converter;
a second electric component disposed in the cockpit, the second electric component including a second DC to DC converter; and
a power source electrically coupled to the first electric component and the second electric component via a plurality of wires.

14. The aircraft of claim 13,
wherein the power source outputs a first DC power,
wherein the first DC to DC converter converts the first DC power to a second DC power that is usable by the first electric component, and
wherein the second DC to DC converter converts the first DC power to a third DC power that is usable by the second electric component; and
wherein, optionally, the power source further includes:
an alternating current (AC) input; and
a power factor correction (PFC) configured to convert the AC input to the first DC power.

15. The aircraft of claim 13 or 14, wherein the first electric component and the second electric component each include at least one of a light, a screen a switch, a control, or an outlet.
